# FASCICULE DE BREVET EUROPEEN

(11) **EP 4 361 034 B1**
(45) Date de publication et mention de la délivrance du brevet: **25.06.2025**
(21) Numéro de dépôt: 23199672.9
(22) Date de dépôt: 26.09.2023
(51) Int. Cl.: B64C 27/32, B64C 27/48, B64C 27/51

(54) **PALE MUNIE D'UN PIED COMPRENANT UNE ATTACHE DE PAS INTÉGRÉE ET DEUX ATTACHES D'AMORTISSEUR INTÉGRÉES, ET UN ROTOR MUNI D'UNE TELLE PALE**
SCHAUFEL MIT EINEM FUSS MIT INTEGRIERTEM PITCH-CLIP UND ZWEI INTEGRIERTEN DÄMPFERBEFESTIGUNGEN UND ROTOR MIT SOLCH EINEM BLATT
BLADE WITH A ROOT COMPRISING AN INTEGRATED PITCH ATTACHMENT AND TWO INTEGRATED DAMPER ATTACHMENTS, AND A ROTOR PROVIDED WITH SUCH A BLADE

(30) Priorité: 26.10.2022 FR 2211154
(43) Date de publication de la demande: 01.05.2024
(73) Titulaire: Airbus Helicopters, 13725 Marignane Cedex (FR)
(72) Inventeur: AZZAT, Adil, 93600 AULNAY-SOUS-BOIS (FR); THIVEND, Julien, 92220 BAGNEUX (FR); COSTON, Sixtine, 92220 BAGNEUX (FR)
(74) Mandataire: GPI Brevets

(56) Documents cités:
- EP-B1- 2 540 620
- EP-B1- 3 246 250
- FR-A1- 2 653 405
- FR-A1- 3 053 312
- US-A1- 2007 280 828
- US-A1- 2014 212 293

## Description

La présente invention concerne une pale munie d'un pied comprenant une attache de pas intégrée et deux attaches d'amortisseur intégrées et un rotor muni d'une telle pale. Par example, le motor peut être un motor principal d'un hélicoptère

Un giravion est muni d'au moins un rotor, et notamment d'au moins un rotor qui participe à la sustentation, voire même à la propulsion, de ce giravion.

Un giravion peut comprendre un rotor participant au contrôle du mouvement en lacet de ce giravion. Un tel rotor est parfois agencé à l'arrière d'un giravion, par exemple sur ou dans une dérive, et est alors dénommé « rotor arrière ».

Un rotor est usuellement pourvu d'une tête sur laquelle est agencée au moins une pale.

Une pale peut être mobile en rotation par rapport à la tête autour d'un axe de pas. Dès lors, le rotor peut comprendre une bielle de pas afin d'ajuster le pas de la pale.

Par ailleurs, une pale peut être mobile en rotation par rapport à la tête autour d'un axe de traînée. Dès lors, le rotor peut comprendre un organe usuellement dénommé « amortisseur de traînée » voire même « adaptateur de fréquence » ou encore « organe de rappel élastique en traînée à amortissement incorporé ». Cet amortisseur de traînée peut apporter de la raideur pour permettre à la pale de revenir dans une position moyenne en l'absence de forces alternées s'exerçant autour de l'axe de traînée. Cet amortisseur de traînée peut permettre d'amortir le déplacement de la pale autour de l'axe de traînée, source de vibrations.

Une pale peut en outre être mobile en rotation par rapport à la tête autour d'un axe de battement.

Une pale peut alors être reliée à une tête de rotor de multiples manières.

En particulier, une pale peut être articulée à une tête de rotor par un organe dénommé « butée sphérique lamifiée » et un connecteur interposé entre la pale et la butée sphérique.

Le document FR 2427251 A décrit une tête de rotor comprenant une ouverture par pale. Chaque ouverture loge une butée sphérique lamifiée autorisant des rotations de la pale autour d'un axe de battement, d'un axe de pas et d'un axe de traînée concourants. La butée sphérique lamifiée comporte une première armature, une partie centrale lamifiée et une deuxième armature fixée à la tête de rotor. Le pied de la pale est alors rendu solidaire d'un connecteur, ce connecteur comprenant deux branches disposées verticalement de part et d'autre de la première armature de la butée lamifiée. Deux boulons traversent alors les branches du connecteur, la première armature et un levier de pas. En outre, une contrefiche de rappel élastique en traînée est accouplée à une ferrure rapportée sur la pale et à la tête de rotor.

Une telle architecture est intéressante. Cette architecture peut faciliter l'agencement d'au moins un amortisseur de traînée et de la bielle de pas, en éloignant la pale de la tête du rotor. Néanmoins, cet agencement nécessite l'utilisation d'un connecteur intermédiaire ayant une forme faiblement aérodynamique. De plus, ce connecteur peut être relativement encombrant, massique et éloigne la pale des axes de battement, de traînée et de pas. En outre, la bielle de pas est alors articulée au connecteur. Enfin, cet architecture impose de multiples composants, et donc peut alourdir le processus de production d'un rotor.

Le document FR 2671050 A1 décrit aussi un rotor muni d'une tête de rotor et, pour chaque pale, une butée sphérique lamifiée reliée par un connecteur à un pied de pale, ce connecteur étant articulé à un levier de pas et à un organe de rappel élastique en traînée.

Le document FR 2584996 A1 décrit une tête de rotor de ce type reliant la pale à la butée sphérique lamifiée à l'aide d'un manchon afin de rendre les pales repliables, le manchon portant le levier de pas.

Le document FR 2584996 A1 décrit une autre tête de rotor comprenant une ouverture par pale. Chaque ouverture loge une butée sphérique lamifiée. La butée sphérique lamifiée comporte une première armature, une partie centrale lamifiée et une deuxième armature fixée à la tête de rotor. Le pied de chaque pale est conformé en une partie d'attache fourchue à deux branches fixées par un boulon à la première armature de la butée lamifiée. Un amortisseur de traînée est articulé à la tête du rotor et à une chape d'attache en saillie par rapport au pied de la pale, du côté du bord de fuite de la pale. Cette chape est portée par une entretoise engagée entre les branches de la partie d'attache fourchue, l'entretoise étant fixée par deux ensembles à boulon et écrou. Du coté du bord d'attaque de la pale, un levier de commande de pas prolonge l'entretoise et se termine par une chape dans laquelle s'articule une bielle de commande de pas.

Une telle architecture est intéressante. Néanmoins, cet agencement nécessite de multiples composants, et notamment une entretoise, ce qui peut alourdir le processus de production d'un rotor. De plus, la forme en fourche n'est pas optimisée d'un point de vue aérodynamique.

Le document FR 2529860 A1 décrit une tête de rotor comprenant deux plateaux. Pour chaque pale, une butée sphérique lamifiée comporte une première armature et une deuxième armature fixée aux plateaux par une broche métallique. Ce document fait en outre référence à la demande de brevet française FR 2516891 déposée le 25 novembre 1981 qui indique que la pale comporte des stratifils formant une boucle rigide venant se loger dans une gorge de la première armature de la butée sphérique lamifiée. Pour chaque pale, le rotor comporte un levier de commande de pas fixé à la pale par des boulons, et articulé à la fois à une bielle de commande de pas et à un organe de rappel élastique en traînée à amortissement incorporé.

Le brevet FR 2 898 581 B1 et le document US 2007/280828 A1 décrivent une pale ayant des rubans inférieur et supérieur attachés à un support fixé à une armature d'une butée sphérique lamifiée, cette armature étant articulée à une bielle de pas.

Le document FR 2 653 405 A1 décrit une pale ayant un pied relié à un moyeu via un manchon.

Le document FR 3 053 312 A1 décrit une pale attachée à une ferrure comprenant deux plaques.

Le document EP 2 540 620 B1 décrit une pale attachée à une ferrure, la ferrure étant connectée à un manchon.

Les documents antérieurs précédemment cités proposent donc des rotors munis de multiples pièces susceptibles de complexifier la fabrication du rotor et/ou de générer une traînée aérodynamique, telles que des connecteurs de pale, des ferrures de liaison à un levier de pale et/ou à un organe de rappel élastique en traînée, des connecteurs ou autres.

Les documents US 2014/212293 A1 et EP 3 246 250 B1 sont aussi connus.

La présente invention a alors pour objet de proposer une pale innovante visant notamment à optimiser le processus de production et/ou à optimiser la masse du rotor ou encore sa trainée aérodynamique.

Ainsi, l'invention vise une pale comprenant un pied de pale prolongé par une partie courante aérodynamique qui s'étend jusqu'à une extrémité libre. Le pied de pale est configuré pour être connecté à une tête de rotor. La pale est configurée pour être mobile en rotation par rapport à la tête de rotor en utilisation au moins autour d'un axe de pas.

De plus, le pied de pale comporte un corps d'attache en matériaux composites monobloc, le corps d'attache étant creux et ayant une enveloppe délimitant un espace interne vide, ladite enveloppe pouvant entourer l'axe de pas autour duquel la pale est mobile en rotation, le corps d'attache intégrant une attache de pas configurée pour être traversée par une tige de liaison de pas reliée à un levier de pas, le corps d'attache intégrant une attache de bord d'attaque configurée pour être traversée par une tige de liaison de bord d'attaque reliée à un premier amortisseur de traînée, le corps d'attache intégrant une attache de bord de fuite configurée pour être traversée par une tige de liaison de bord de fuite configurée pour être reliée à un deuxième amortisseur de traînée, le corps d'attache intégrant une attache de connexion configurée pour être traversée par au moins deux tiges de connexion reliées à une première armature d'une butée sphérique lamifiée.

L'expression « attache de bord d'attaque » signifie que cette attache est située du côté de la pale comprenant le bord d'attaque de la pale. A l'inverse, l'expression « attache de bord de fuite » signifie que cette attache est située du côté de la pale comprenant le bord de fuite de la pale.

Le terme « attache » désigne une ou plusieurs parties du corps, et par exemple un orifice apte à être traversé par une tige et/ou une aile d'une chape.

Le terme « monobloc » signifie que le corps d'attache est d'un seul tenant, les éléments du corps d'attache étant indissociables les uns des autres sans casse. Un corps d'attache monobloc n'est donc pas assimilable à un dispositif comprenant plusieurs organes fixés les uns aux autres avec des moyens réversibles, tels que des vis par exemple.

La pale comporte ainsi un pied de pale monobloc en matériaux composites.

Par ailleurs, la partie courante de la pale et le pied constituent de plus une seule et même pièce. Le corps d'attache est raccordé à la partie courante en assurant une transition aérodynamique.

Le pied de pale en matériaux composites est pourvu d'une attache de bord d'attaque et d'une attache de bord de fuite pour une connexion à des amortisseurs de traînée usuels, d'une attache de pas pour une connexion à une bielle de pas, et d'une attache de connexion pour être articulé à une tête de rotor via une butée sphérique lamifiée.

Un tel pied de pale en matériaux composites intégrant des connexions à la bielle de pas, aux amortisseurs de traînée et à la tête de rotor peut alors être dimensionné au travers de « chape composite » de la pale, ou encore appelé en anglais « composite lug ».

La mise en œuvre d'une pale d'un nouveau type intégrant des connexions à la bielle de pas, aux amortisseurs de traînée et à la tête de rotor permet de limiter le nombre de pièces du rotor. Il peut en résulter un gain en termes de masse voire d'efforts à fournir par les opérateurs lors de maintenance et/ou de l'assemblage du rotor. La fabrication de la pale intégrant ce pied de pale muni du corps d'attache peut en particulier être automatisée ce qui peut tendre à réduire les coûts de fabrication.

En outre, la pale peut tendre améliorer la durée de vie du rotor. En particulier, le corps d'attache peut présenter une grande résistance à la fatigue.

Par ailleurs, le corps d'attache forme une coque creuse qui peut tendre à générer moins de traînée aérodynamique qu'un connecteur usuel ou qu'une partie fourchue.

Selon un autre aspect, le fait de connecter directement la pale à une butée sphérique lamifiée, à savoir sans utiliser un connecteur intermédiaire, peut tendre à limiter l'encombrement du rotor.

Selon un autre aspect, les ordres de modifications du pas de la pale sont en outre directement transmis à cette pale, sans passer par un manchon par exemple.

La pale peut en outre comprendre une ou plusieurs des caractéristiques qui suivent.

Selon une possibilité, l'attache de pas peut être plus proche de l'attache de bord d'attaque que de l'attache de bord de fuite.

La plus petite distance entre le bord d'attaque d'une section et l'attache de pas est alors inférieure à la plus petite distance entre le bord de fuite de cette section et l'attache de pas.

Autrement dit, l'attache de pas est agencée du côté du bord d'attaque de la pale.

Selon une possibilité compatible avec les précédentes, l'attache de pas peut comporter une chape de pas munie de deux ailes de pas parallèles indissociables de ladite enveloppe, lesdites deux ailes de pas comprenant respectivement deux orifices de pas alignés selon un axe de liaison de pas et configurés pour être traversés par la tige de liaison de pas selon ledit axe de liaison de pas, ladite chape de pas étant en saillie de l'enveloppe dans un milieu extérieur à la pale.

L'attache de pas comporte ainsi une chape de pas solidaire de l'enveloppe. De plus, l'attache de pas est alors agencée en dehors de l'espace interne du corps afin de pouvoir être aisément connectée à une bielle de pas.

Selon une possibilité compatible avec les précédentes, l'attache de bord d'attaque peut comporter une chape de bord d'attaque munie de deux ailes de bord d'attaque indissociables de ladite enveloppe, lesdites deux ailes de bord d'attaque comprenant respectivement deux orifices de bord d'attaque alignés selon un axe de bord d'attaque et configurés pour être traversés par la tige de liaison de bord d'attaque selon ledit axe de bord d'attaque, ladite chape de bord d'attaque étant en saillie de l'enveloppe dans un milieu extérieur à la pale.

L'attache de bord d'attaque comporte ainsi une chape de bord d'attaque solidaire de l'enveloppe. De plus, l'attache de bord d'attaque est alors agencée en dehors de l'espace interne du corps. Cet agencement peut faciliter la connexion d'un amortisseur de traînée interpale, à savoir qui s'étend entre deux pales adjacentes.

Les cas échéant, chaque aile de pas de l'attache de pas précédemment décrite peut être accolée aux deux ailes de bord d'attaque.

L'attache de pas et l'attache de bord d'attaque peuvent former conjointement une ferrure en matériaux composites compacte.

Alternativement, l'attache de bord d'attaque peut comporter deux orifices de bord d'attaque ménagés dans l'enveloppe de part et d'autre dudit espace interne selon un axe de bord d'attaque, les deux orifices de bord d'attaque étant configurés pour être traversés par la tige de liaison de bord d'attaque selon ledit axe de bord d'attaque.

Dans ce cas, un amortisseur de traînée s'étend partiellement dans l'espace interne en étant traversé par la tige de liaison de bord d'attaque. Cet agencement peut tendre à réduire la traînée aérodynamique du rotor.

Selon une possibilité compatible avec les précédentes, l'attache de bord de fuite peut comporter une chape de bord de fuite munie de deux ailes de bord de fuite parallèles indissociables de ladite enveloppe, lesdites deux ailes de bord de fuite comprenant respectivement deux orifices de bord de fuite alignés selon un axe de bord de fuite et configurés pour être traversés par la tige de liaison de bord de fuite selon ledit axe de bord de fuite, ladite chape de bord de fuite étant en saillie de l'enveloppe dans un milieu extérieur à la pale.

L'attache de bord de fuite comporte alors une chape de bord de fuite solidaire de l'enveloppe. De plus, l'attache de bord de fuite est alors agencée en dehors de l'espace interne du corps. Cet agencement peut faciliter la connexion d'un amortisseur de traînée interpale, à savoir qui s'étend entre deux pales.

Alternativement, l'attache de bord de fuite peut comporter deux orifices de bord de fuite ménagés dans l'enveloppe de part et d'autre dudit espace interne selon un axe de bord de fuite, les deux orifices de bord de fuite étant configurés pour être traversés par la tige de liaison de bord de fuite selon ledit axe de bord de fuite.

Dans ce cas, un amortisseur de traînée s'étend partiellement dans l'espace interne en étant traversé par la tige de liaison de bord de fuite. Cet agencement peut tendre à optimiser la traînée aérodynamique du rotor.

Dans ce contexte, selon une première réalisation le corps d'attache peut comporter :
- une attache de pas munie de deux ailes de pas parallèles indissociables de ladite enveloppe, lesdites deux ailes de pas comprenant respectivement deux orifices de pas alignés selon un axe de liaison de pas et configurés pour être traversés par la tige de liaison de pas selon ledit axe de liaison de pas, ladite chape de pas étant en saillie de l'enveloppe dans un milieu extérieur à la pale,
- une attache de bord d'attaque comportant une chape de bord d'attaque munie de deux ailes de bord d'attaque parallèles indissociables de ladite enveloppe, lesdites deux ailes de bord d'attaque comprenant respectivement deux orifices de bord d'attaque alignés selon un axe de bord d'attaque et configurés pour être traversés par la tige de liaison de bord d'attaque selon ledit axe de bord d'attaque, ladite chape de bord d'attaque étant en saillie de l'enveloppe dans un milieu extérieur à la pale, et
- une attache de bord de fuite comportant une chape de bord de fuite munie de deux ailes de bord de fuite parallèles indissociables de ladite enveloppe, lesdites deux ailes de bord de fuite comprenant respectivement deux orifices de bord de fuite alignés selon un axe de bord de fuite et configurés pour être traversés par la tige de liaison de bord de fuite selon ledit axe de bord de fuite, ladite chape de bord de fuite étant en saillie de l'enveloppe dans un milieu extérieur à la pale.

Cette première réalisation peut par exemple être employée pour obtenir un pied de pale compact.

Selon une deuxième réalisation le corps d'attache peut comporter :
- une attache de pas munie de deux ailes de pas parallèles indissociables de ladite enveloppe, lesdites deux ailes de pas comprenant respectivement deux orifices de pas alignés selon un axe de liaison de pas et configurés pour être traversés par la tige de liaison de pas selon ledit axe de liaison de pas, ladite chape de pas étant en saillie de l'enveloppe dans un milieu extérieur à la pale,
- une attache de bord d'attaque comportant deux orifices de bord d'attaque ménagés dans l'enveloppe de part et d'autre dudit espace interne selon un axe de bord d'attaque, les deux orifices de bord d'attaque étant configurés pour être traversés par la tige de liaison de bord d'attaque selon ledit axe de bord d'attaque, et
- une attache de bord de fuite comportant deux orifices de bord de fuite ménagés dans l'enveloppe de part et d'autre dudit espace interne selon un axe de bord de fuite, les deux orifices de bord de fuite étant configurés pour être traversés par la tige de liaison de bord de fuite selon ledit axe de bord de fuite.

Cette deuxième réalisation peut par exemple être employée pour obtenir un pied de pale optimisé d'un point de vue aérodynamique.

Selon une possibilité compatible avec les précédentes, l'attache de connexion peut comporter, pour chaque tige de connexion, un jeu de deux orifices de connexion ménagés dans l'enveloppe, par exemple de part et d'autre dudit espace interne, selon un axe de connexion configuré pour être confondu avec une tige de connexion.

Le cas échéant, l'axe de bord de fuite, l'axe de bord d'attaque et l'axe de connexion peuvent être parallèles entre eux. L'axe de liaison de pas peut alors se trouver dans un plan perpendiculaire à ces axes de bord de fuite, de bord d'attaque et de connexion.

Selon une possibilité compatible avec les précédentes, l'enveloppe peut comporter une couche en matériaux composites entourant ledit espace interne et prolongeant la partie courante, ladite enveloppe comportant un renfort stratifié au moins au niveau de l'attache de bord de fuite et de l'attache de bord d'attaque.

Le renfort stratifié peut renforcer l'enveloppe, notamment au niveau des parties formant l'attache de bord de fuite et l'attache de bord d'attaque.

Outre une pale, l'invention vise un rotor muni d'une tête de rotor, le rotor comprenant au moins une butée sphérique lamifiée, la butée sphérique lamifiée comprenant une partie centrale lamifiée insérée entre une première armature et une deuxième armature, la deuxième armature étant fixée à la tête de rotor.

Ce rotor comprend alors au moins une pale selon l'invention, ledit rotor comprenant au moins deux dites tiges de connexion traversant l'attache de connexion et la deuxième armature, le rotor comprenant une tige de liaison de pas traversant l'attache de pas et une articulation de pas d'une bielle de pas, le rotor comprenant une tige de liaison de bord d'attaque traversant l'attache de bord d'attaque et une articulation de bord d'attaque d'un premier amortisseur de traînée, le rotor comprenant une tige de liaison de bord de fuite traversant l'attache de bord de fuite et une articulation de bord de fuite d'un deuxième amortisseur de traînée.

Selon une possibilité, le rotor pouvant comprendre au moins trois pales selon l'invention, l'attache de bord de fuite d'une pale particulière peut être reliée par un amortisseur de traînée à l'attache de bord d'attaque de la pale qui suit selon un sens de rotation du rotor et l'attache de bord d'attaque de la pale particulière est reliée par un autre amortisseur de traînée à l'attache de bord de fuite de la pale qui précède selon ledit sens de rotation.

Chaque amortisseur peut faire office de premier amortisseur de traînée au regard d'une pale et de deuxième amortisseur de traînée au regard d'une pale adjacente.

Par ailleurs, un aéronef peut comprendre un rotor selon l'invention.

L'invention et ses avantages apparaîtront avec plus de détails dans le cadre de la description qui suit avec des exemples donnés à titre illustratif en référence aux figures annexées qui représentent :
la figure 1, une vue en perspective d'une pale selon l'invention,
la figure 2, une vue en perspective d'une pale selon l'invention,
la figure 3, une vue partielle d'un rotor ayant une pale selon l'invention, et
la figure 4, une coupe locale d'un rotor ayant une pale selon l'invention.

Les éléments présents dans plusieurs figures distinctes sont affectés d'une seule et même référence.

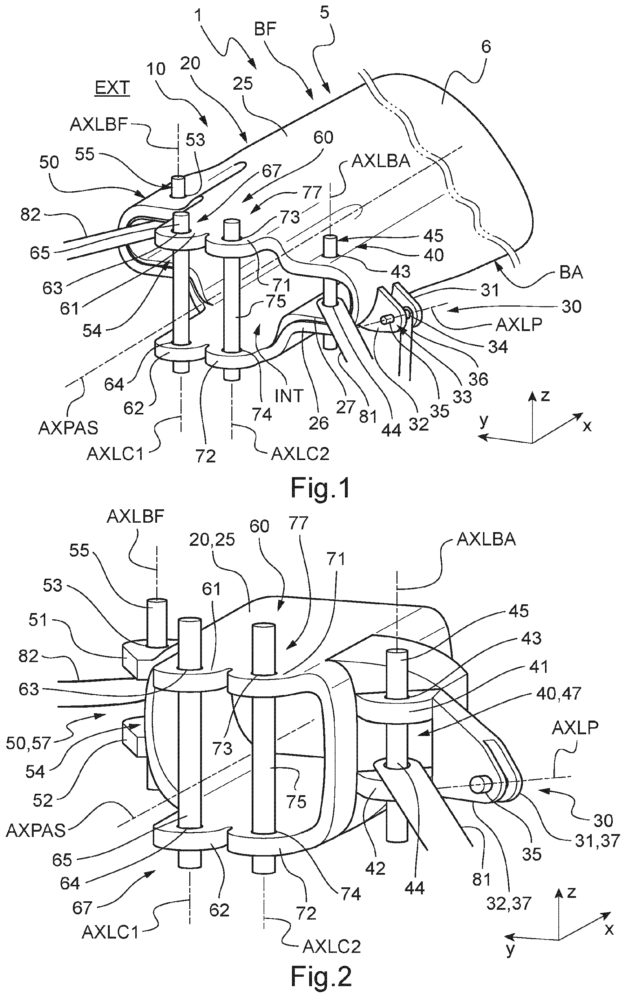

Trois directions X, Y et Z orthogonales les unes par rapport aux autres sont attachées aux pales des figures 1 à 4.

La direction X est dite longitudinale et s'étend selon l'envergure de la pale. Une autre direction Y est dite transversale et s'étend selon une direction parallèle aux sections de la pale. La troisième direction Z est dite verticale et s'étend selon l'épaisseur de la pale.

Les figures 1 et 2 présentent des exemples de pales 1 selon l'invention.

Quelle que soit la réalisation et en référence à la figure 1, cette pale 1 comporte longitudinalement, à savoir selon son envergure, un pied 10 de pale qui est prolongé par une partie courante 5 aérodynamique. La partie courante 5 s'étend jusqu'à une extrémité libre 6.

Le pied 10 de pale comprend un corps d'attache 20 en matériaux composites monobloc, à savoir d'un seul tenant.

Le corps d'attache 20 est creux ce qui tend à optimiser sa masse.

Le corps d'attache 20 comprend notamment une enveloppe 25 délimitant un espace interne INT vide. Cette enveloppe 25 entoure l'espace interne, éventuellement radialement par rapport à l'axe de pas AXPAS de la pale. Cette enveloppe 25 entoure donc totalement un tronçon de l'axe de pas AXPAS de la pale 1. Autrement dit, l'axe de pas AXPAS passe par l'espace interne INT.

L'enveloppe 25 en matériaux composites peut comprendre un empilement de plusieurs plis composites d'orientations différentes. Des plis du corps d'attache 20 peuvent s'étendre dans la partie courante 5.

Selon un autre aspect, le corps d'attache 20 intègre diverses attaches 30, 40, 50, 60. Le terme « intègre » signifie que les attaches sont des parties intégrantes du corps d'attache 20, et non pas des attaches fixées au corps d'attache 20 par des moyens dissociables de vissage ou autres.

Ainsi, le corps d'attache 20 intègre une attache de pas 30 pour être reliée à un levier de pas 36 apte à mettre en rotation la pale autour d'un axe de pas AXPAS. Le levier de pas 36 est représenté de manière schématique pour ne pas alourdir la figure 1. Cette attache de pas 30 peut être traversée selon un axe de liaison de pas AXLP par une tige de liaison de pas 35 reliée à un levier de pas 36, et par exemple à une articulation du levier de pas 36. Par exemple, une telle tige de liaison de pas 35 comporte une vis, voire un écrou, une broche ou autres. Selon un exemple, le levier de pas 36 comporte une rotule de pas, la tige de liaison de pas 35 traversant une première partie de l'attache de pas 30, la rotule de pas et une deuxième partie de l'attache de pas 30.

Eventuellement, l'attache de pas 30 peut être positionnée du côté du bord d'attaque BA de la pale 1.

Selon une possibilité, l'attache de pas 30 peut comporter une chape de pas 37. Cette chape de pas 37 peut être une chape femelle comprenant deux ailes de pas 31, 32 parallèles indissociables de l'enveloppe 25. Un levier de pas 36 peut s'étendre entre les deux ailes de pas 31, 32 pour être articulé par la tige de liaison de pas 35 à la pale 1. A cet effet, les deux ailes de pas 31, 32 comprennent respectivement deux orifices de pas 33, 34 alignés selon l'axe de liaison de pas AXLP et configurés pour être traversés par la tige de liaison de pas 35.

Par ailleurs, la chape de pas 37 est en saillie de l'enveloppe 25 dans un milieu EXT extérieur à la pale 1.

De plus, le corps d'attache 20 intègre une attache de connexion 60 pour être reliée à une tête de rotor, et par exemple à une butée sphérique lamifiée 95 fixée à la tête de rotor. Cette attache de connexion 60 peut être traversée par au moins deux tiges de connexion 65,75 reliées à une première armature 96 d'une butée sphérique lamifiée 95 selon un axe de connexion AXLC1, AXLC2. Par exemple, chaque tige de connexion 65, 75 comporte une vis, voire un écrou, une broche ou autres. Selon un exemple, chaque tige de connexion 65, 75 traverse une première partie de l'attache de connexion 60, la première armature 96 puis une deuxième partie de l'attache de connexion 60.

L'attache de connexion 60 peut comporter un jeu 67, 77 de connexion par tige de connexion respective pour être connecté à la tête de rotor.

Indépendamment du nombre de jeux, chaque jeu 67, 77 comporte deux orifices de connexion 63-64, 73-74. Les deux orifices de connexion 63-64, 73-74 d'un même jeu de connexion 67, 77 sont ménagés dans l'enveloppe 25, par exemple de part et d'autre de l'espace interne INT ou étant décalés en dehors de l'espace interne parallèlement à l'axe de pas comme illustrés. Chaque orifice de connexion 63-64, 73-74 traverse une partie de l'enveloppe 25 de part en part. Les deux orifices de connexion 63-64, 73-74 d'un même jeu de connexion 67, 77 sont alignés selon un axe de connexion AXLC1, AXLC2 configuré pour laisser passer une tige de connexion 65, 75.

Par exemple, l'enveloppe 25 comporte une première portée supérieure 61 munie d'un premier orifice de connexion supérieur 63 et une première portée inférieure 62 munie d'un premier orifice de connexion inférieur 64 situé au droit du premier orifice de connexion supérieur 63 selon un premier axe de connexion AXLC1. De plus, l'enveloppe 25 comporte une deuxième portée supérieure 71 munie d'un deuxième orifice de connexion supérieur 73 et une deuxième portée inférieure 72 munie d'un deuxième orifice de connexion inférieur 74 situé au droit du deuxième orifice de connexion supérieur 73 selon un deuxième axe de connexion AXLC2. Une première tige de connexion 65 peut ainsi traverser le premier orifice de connexion supérieur 63, une armature d'une butée sphérique lamifiée 95, puis le premier orifice de connexion inférieur 64. De plus, une deuxième tige de connexion 75 peut ainsi traverser le deuxième orifice de connexion supérieur 73, l'armature précitée de la butée sphérique lamifiée 95, puis le deuxième orifice de connexion inférieur 74.

De plus, le corps d'attache 20 intègre une attache de bord d'attaque 40 pour être relié à un premier amortisseur de traînée 81. Le premier amortisseur de traînée 81 est représenté de manière schématique pour ne pas alourdir la figure 1. L'attache de bord d'attaque 40 est positionnée du côté du bord d'attaque BA de la pale 1.

Cette attache de bord d'attaque 40 peut être traversée selon un axe de bord d'attaque AXLBA par une tige de liaison de bord d'attaque 45 reliée à un premier amortisseur de traînée 81, et par exemple à une articulation du premier amortisseur de traînée 81. Par exemple, une telle tige de liaison de bord d'attaque 45 comporte une vis voire un écrou, une broche ou autres. Selon un exemple, cette articulation comporte une rotule de bord d'attaque, la tige de liaison de bord d'attaque 45 traversant une première partie de l'attache de bord d'attaque 40, la rotule de bord d'attaque et une deuxième partie de l'attache de bord d'attaque 40.

Enfin, le corps d'attache 20 intègre une attache de bord de fuite 50 pour être relié à un deuxième amortisseur de traînée 82. Le deuxième amortisseur de traînée 82 est représenté de manière schématique pour ne pas alourdir la figure 1. Cette attache de bord de fuite 50 peut être traversée selon un axe de bord de fuite AXLBF par une tige de liaison de bord de fuite 55 reliée au deuxième amortisseur de traînée 82, et par exemple à une articulation du deuxième amortisseur de traînée 82. Par exemple, une telle tige liaison de bord de fuite 55 comporte une vis voire un écrou, une broche ou autres. Selon un exemple, cette articulationhinge comporte une rotule de bord de fuite, la tige de liaison de bord de fuite 55 traversant une première partie de l'attache de bord de fuite 50, la rotule de bord de fuite et une deuxième partie de l'attache de bord de fuite 50.

Eventuellement, l'attache de pas 30 peut être plus proche de l'attache de bord d'attaque 40 que de l'attache de bord de fuite 50

Par ailleurs, l'axe de bord de fuite AXLBF, l'axe de bord d'attaque AXLBA et les axes de connexion AXLC1, AXLC2 peuvent être parallèles. L'axe de liaison de pas AXLP peut alors se trouver dans un plan perpendiculaire à ces axes de bord de fuite AXLBF, de bord d'attaque AXLBA et de connexion AXLC1, AXLC2.

Selon une autre caractéristique indépendante des précédentes, l'enveloppe 25 est en matériaux composites. L'enveloppe 25 peut comprendre une couche 26 en matériaux composites, cette couche 26 peut entourer l'espace interne INT. En outre, cette couche 26 peut prolonger la partie courante 5, en présentant par exemple des plis communs avec la partie courante 5.

L'enveloppe 25 peut en outre comporter au moins un renfort stratifié 27 solidaire de la couche 26, par exemple au moins au niveau de l'attache de bord de fuite 50 et/ou de l'attache de bord d'attaque 40.

La figure 1 illustre dans ce contexte un premier exemple de réalisation des attaches de bord d'attaque 40 et de bord de fuite 50.

Selon ce premier exemple, l'attache de bord d'attaque 40 comporte deux orifices de bord d'attaque 43, 44 ménagés dans l'enveloppe 25 de part et d'autre de l'espace interne INT selon un axe de bord d'attaque AXLBA. Chaque orifice de bord d'attaque 43, 44 traverse une partie de l'enveloppe 25 de part en part. La tige de liaison de bord d'attaque 45 peut ainsi traverser successivement, selon l'axe de bord d'attaque AXLBA, un orifice de bord d'attaque 43, un premier amortisseur de traînée 81 présent dans l'espace interne INT puis l'autre orifice de bord d'attaque 44.

De même, l'attache de bord de fuite 50 comporte deux orifices de bord de fuite 53, 54 ménagés dans l'enveloppe 25 de part et d'autre de l'espace interne INT selon un axe de bord de fuite AXLBF. Chaque orifice de bord de fuite 53, 54 traverse une partie de l'enveloppe 25 de part en part. La tige de liaison de bord de fuite 55 peut ainsi traverser successivement, selon l'axe de bord de fuite AXLBF, un orifice de bord de fuite 53, un deuxième amortisseur de traînée 82 présent dans l'espace interne INT puis l'autre orifice de bord de fuite 54.

La figure 2 illustre un deuxième exemple de réalisation des attaches de bord d'attaque 40 et de bord de fuite 50.

L'attache de bord d'attaque 40 comprend une chape de bord d'attaque 47. Cette chape de bord d'attaque 47 peut être une chape femelle comprenant deux ailes de bord d'attaque 41, 42 parallèles indissociables de l'enveloppe 25. Un premier amortisseur de traînée 81 peut s'étendre entre les deux ailes de bord d'attaque 41, 42 pour être articulé par une tige de liaison de bord d'attaque 45 à la pale 1. A cet effet, les deux ailes de bord d'attaque 41, 42 comprennent respectivement deux orifices de bord d'attaque 43, 44 alignés selon un axe de bord d'attaque AXLBA et configurés pour être traversés par la tige de liaison de bord d'attaque 45.

Par ailleurs, la chape de bord d'attaque 47 est en saillie de l'enveloppe 25 dans le milieu EXT extérieur à la pale 1.

Eventuellement, chaque aile de pas 31, 32 est accolée aux deux ailes de bord d'attaque 41, 42.

De même, l'attache de bord de fuite 50 comprend une chape de bord de fuite 57. Cette chape de bord de fuite 57 peut être une chape femelle comprenant deux ailes de bord de fuite 51, 52 parallèles indissociables de l'enveloppe 25. Un deuxième amortisseur de traînée 82 peut s'étendre entre les deux ailes de bord de fuite 51, 52 pour être articulé par une tige de liaison de bord de fuite 55 à la pale 1. A cet effet, les deux ailes de bord de fuite 51, 52 comprennent respectivement deux orifices de bord de fuite 53, 54 alignés selon un axe de bord de fuite AXLBF et configurés pour être traversés par la tige de liaison de bord de fuite 55.

Par ailleurs, la chape de bord de fuite 57 est en saillie de l'enveloppe 25 dans le milieu EXT extérieur à la pale 1.

Les figures 1 et 2 illustrent deux exemples de réalisation. Néanmoins, il est possible d'obtenir d'autres réalisations en combinant les exemples des figures 1 et 2. Ainsi, une des attaches de bord d'attaque 40 et de bord de fuite 50 de la figure 1 pourrait être remplacée par l'attache correspondante de la figure 2.

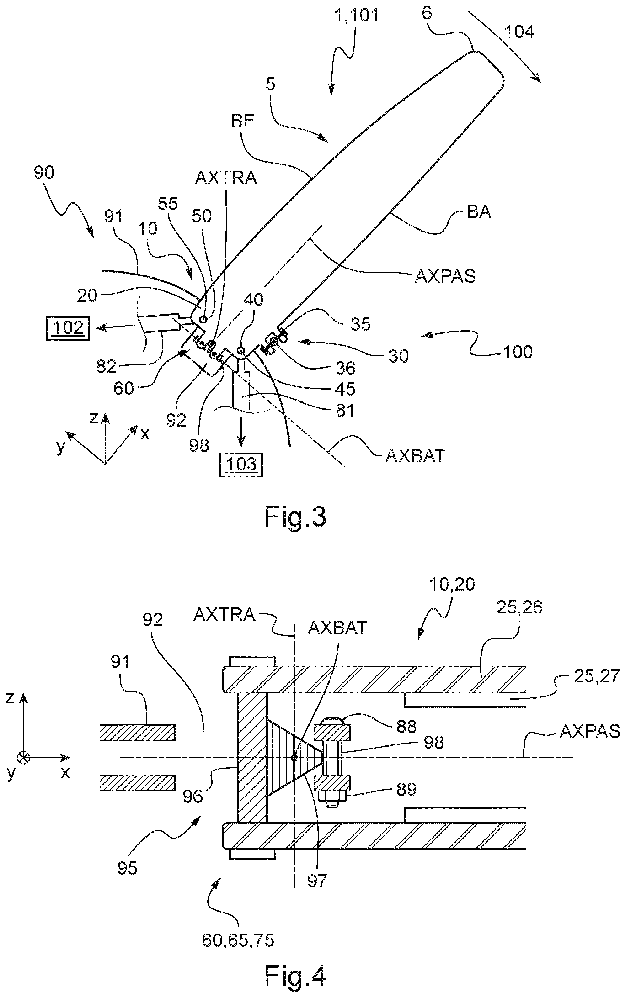

La figure 3 présente un rotor 90 muni d'une pale 1 précédemment décrite. Éventuellement, ce rotor 90 peut être agencé sur un aéronef 100. La pale illustrée est du type de la figure 1, mais pourrait être du type de la figure 2 ou d'un type alternatif.

Le rotor 90 est muni d'une tête 91 de rotor portant au moins une pale 1. La référence 1 est utilisée pour nommer n'importe quelle pale selon l'invention, les références 101, 102 et 103 étant employées pour désigner des pales particulières.

Le rotor 90 peut comprendre une butée sphérique lamifiée 95 par pale 1, chaque pale 1 étant alors articulée à la tête 91 de rotor par une butée sphérique lamifiée 95 correspondante. Une telle pale 1 peut alors posséder par rapport à la tête 91 de rotor une liberté de mouvement en rotation autour d'un axe de pas AXPAS, d'un axe de battement AXBAT et d'un axe de traînée AXTRA concourants.

En référence à la figure 4, la tête 91 de rotor peut comprendre une alvéole 92 par pale 1 logeant une butée sphérique lamifiée 95. Cette butée sphérique lamifiée 95 peut comprendre une partie centrale 97 lamifiée insérée entre une première armature 96 et une deuxième armature 98. La deuxième armature 98 peut être solidarisée à la tête 91 de rotor par des moyens usuels 88,89. De plus, la première armature 96 est solidarisé au pied 10 de la pale 1 via les tiges de connexion 65, 75.

En référence à la figure 3, une tige de liaison de pas 35 traverse l'attache de pas 30 de la pale 1 et une articulation de pas d'une bielle de pas 36.

De plus, une tige de liaison de bord d'attaque 45 traverse l'attache de bord d'attaque 40 et une articulation de bord d'attaque d'un premier amortisseur de traînée 81. De même, une tige de liaison de bord de fuite 55 traverse l'attache de bord de fuite 50 et une articulation de bord de fuite d'un deuxième amortisseur de traînée 82.

Eventuellement, le rotor 90 peut comprendre au moins trois pales 101, 102, 103. Dans ce cas, le deuxième amortisseur de traînée 82 d'une pale particulière 101 peut être articulé à l'attache de bord d'attaque 40 de la pale 102 qui suit selon le sens de rotation 104 du rotor 90. De plus, le premier amortisseur de traînée 81 de la pale particulière 101 peut être articulé à l'attache de bord de fuite 50 de la pale 103 qui précède selon le sens de rotation 104.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un autre moyen sans sortir du cadre de la présente invention, qui est défini par les revendications annexées.

## Revendications

1. Pale (1) comprenant un pied (10) de pale prolongé par une partie courante (5) aérodynamique qui s'étend jusqu'à une extrémité libre (6),
**caractérisée en ce que** le pied (10) de pale comporte un corps d'attache (20) en matériaux composites monobloc, le corps d'attache (20) étant creux et ayant une enveloppe (25) délimitant un espace interne (INT) vide, le corps d'attache (20) intégrant une attache de pas (30) configurée pour être traversée par une tige de liaison de pas (35) reliée à un levier de pas (36), le corps d'attache (20) intégrant une attache de bord d'attaque (40) configurée pour être traversée par une tige de liaison de bord d'attaque (45) reliée à un premier amortisseur de traînée (81), le corps d'attache (20) intégrant une attache de bord de fuite (50) configurée pour être traversée par une tige de liaison de bord de fuite (55) configurée pour être reliée à un deuxième amortisseur de traînée (82), le corps d'attache (20) intégrant une attache de connexion (60) configurée pour être traversée par au moins deux tiges de connexion (65, 75) reliées à une première armature (96) d'une butée sphérique lamifiée (95).

2. Pale selon la revendication 1,
**caractérisée en ce que** ladite attache de pas (30) est plus proche de l'attache de bord d'attaque (40) que de l'attache de bord de fuite (50).

3. Pale selon l'une quelconque des revendications 1 à 2,
**caractérisée en ce que** ladite attache de pas (30) comporte une chape de pas (37) munie de deux ailes de pas (31, 32) parallèles indissociables de ladite enveloppe (25), lesdites deux ailes de pas (31, 32) comprenant respectivement deux orifices de pas (33, 34) alignés selon un axe de liaison de pas (AXLP) et configurés pour être traversés par la tige de liaison de pas (35) selon ledit axe de liaison de pas (AXLP), ladite chape de pas (37) étant en saillie de l'enveloppe (25) dans un milieu (EXT) extérieur à la pale (1).

4. Pale selon l'une quelconque des revendications 1 à 3,
**caractérisée en ce que** ladite attache de bord d'attaque (40) comporte une chape de bord d'attaque (47) munie de deux ailes de bord d'attaque (41, 42) parallèles indissociables de ladite enveloppe (25), lesdites deux ailes de bord d'attaque (41, 42) comprenant respectivement deux orifices de bord d'attaque (43, 44) alignés selon un axe de bord d'attaque (AXLBA) et configurés pour être traversés par la tige de liaison de bord d'attaque (45) selon ledit axe de bord d'attaque (AXLBA), ladite chape de bord d'attaque (47) étant en saillie de l'enveloppe (25) dans un milieu (EXT) extérieur à la pale (1).

5. Pale selon les revendications 3 et 4,
**caractérisée en ce que** chaque aile de pas (31, 32) est accolée aux deux ailes de bord d'attaque (41, 42).

6. Pale selon l'une quelconque des revendications 1 à 3,
**caractérisée en ce que** ladite attache de bord d'attaque (40) comporte deux orifices de bord d'attaque (43, 44) ménagés dans l'enveloppe (25) de part et d'autre dudit espace interne (INT) selon un axe de bord d'attaque (AXLBA), les deux orifices de bord d'attaque (43, 44) étant configurés pour être traversés par la tige de liaison de bord d'attaque (45) selon ledit axe de bord d'attaque (AXLBA).

7. Pale selon l'une quelconque des revendications 1 à 6,
**caractérisée en ce que** ladite attache de bord de fuite (50) comporte une chape de bord de fuite (57) munie de deux ailes de bord de fuite (51, 52) parallèles indissociables de ladite enveloppe (25), lesdites deux ailes de bord de fuite (51, 52) comprenant respectivement deux orifices de bord de fuite (53, 54) alignés selon un axe de bord de fuite (AXLBF) et configurés pour être traversés par la tige de liaison de bord de fuite (55) selon ledit axe de bord de fuite (AXLBF), ladite chape de bord de fuite (57) étant en saillie de l'enveloppe (25) dans un milieu (EXT) extérieur à la pale (1).

8. Pale selon l'une quelconque des revendications 1 à 6,
**caractérisée en ce que** ladite attache de bord de fuite (50) comporte deux orifices de bord de fuite (53, 54) ménagés dans l'enveloppe (25) de part et d'autre dudit espace interne (INT) selon un axe de bord de fuite (AXLBF), les deux orifices de bord de fuite (53, 54) étant configurés pour être traversés par la tige de liaison de bord de fuite (55) selon ledit axe de bord de fuite (AXLBF).

9. Pale selon les revendications 3 et 4 et 7,
**caractérisée en ce que** le corps d'attache (20) comporte une attache de pas (30) selon la revendication 3, une attache de bord d'attaque (40) selon la revendication 4 et une attache de bord de fuite (50) selon la revendication 7.

10. Pale selon les revendications 3 et 6 et 8,
**caractérisée en ce que** le corps d'attache (20) comporte une attache de pas (30) selon la revendication 3, une attache de bord d'attaque (40) selon la revendication 6 et une attache de bord de fuite (50) selon la revendication 8.

11. Pale selon l'une quelconque des revendications 1 à 10,
**caractérisée en ce que** ladite attache de connexion (60) comporte, pour chaque tige de connexion (65, 75), un jeu (67, 77) de deux orifices de connexion (63-64, 73-74,) ménagés dans l'enveloppe (25) selon un axe de connexion (AXLC1, AXLC2) configuré pour être confondu avec une tige de connexion (65, 75).

12. Pale selon l'une quelconque des revendications 1 à 11,
**caractérisée en ce que** ladite enveloppe (25) comporte une couche (26) en matériaux composites entourant ledit espace interne (INT) et prolongeant la partie courante (5), ladite enveloppe (25) comportant un renfort stratifié (27) au moins au niveau de l'attache de bord de fuite (50) et de l'attache de bord d'attaque (40).

13. Rotor (90) muni d'une tête (91) de rotor, le rotor (90) comprenant au moins une butée sphérique lamifiée (95), la butée sphérique lamifiée (95) comprenant une partie centrale (97) lamifiée insérée entre une première armature (96) et une deuxième armature (98), la deuxième armature (98) étant fixée à la tête (91) de rotor,
**caractérisé en ce que** le rotor (90) comprend au moins une pale (1) selon l'une quelconque de revendications 1 à 12, ledit rotor (90) comprenant au moins deux dites tiges de connexion (65, 75) traversant ladite attache de connexion (60) et ladite deuxième armature (98), ledit rotor (90) comprenant une tige de liaison de pas (35) traversant ladite attache de pas (30) et une articulation de pas d'une bielle de pas (36), ledit rotor (90) comprenant une tige de liaison de bord d'attaque (45) traversant ladite attache de bord d'attaque (40) et une articulation de bord d'attaque d'un premier amortisseur de traînée (81), ledit rotor (90) comprenant une tige de liaison de bord de fuite (55) traversant ladite attache de bord de fuite (50) et une articulation de bord de fuite d'un deuxième amortisseur de traînée (82).

14. Rotor selon la revendication 13,
**caractérisé en ce que** le rotor (90) comprenant au moins trois pales (101, 102, 103) selon l'une quelconque des revendications 1 à 12, l'attache de bord de fuite d'une pale particulière (101) est reliée par un amortisseur de traînée (82) à l'attache de bord d'attaque de la pale (102) qui suit selon un sens de rotation (104) du rotor (90) et l'attache de bord d'attaque de la pale particulière (101) est reliée par un autre amortisseur de traînée (81) à l'attache de bord de fuite de la pale (103) qui précède selon ledit sens de rotation (104).

15. Aéronef (100),
**caractérisé en ce que** l'aéronef (100) comporte un rotor (90) selon l'une quelconque des revendications 13 à 14.

## Patentansprüche

1. Blatt (1) mit einer Blattwurzel (10), die durch einen aerodynamischen Laufteil (5) verlängert ist, der sich bis zu einer freien Spitze (6) erstreckt,
**dadurch gekennzeichnet, dass** die Blattwurzel (10) einen einteiligen Befestigungskörper (20) aus Verbundwerkstoffen aufweist, wobei der Befestigungskörper (20) hohl ist und eine Hülle (25) aufweist, die einen leeren Innenraum (INT) begrenzt, dass der Befestigungskörper (20) einen Anstellwinkelanschluss (30) umfasst, der konfiguriert ist, um von einer mit einem Anstellwinkelhebel (36) verbundenen Anstellwinkelverbindungsstange (35) durchquert zu werden, dass der Befestigungskörper (20) einen Blattvorderkantenanschluss (40) umfasst, der konfiguriert ist, um von einer Blattvorderkantenverbindungsstange (45) durchquert zu werden, die konfiguriert ist, um mit einem ersten Luftwiderstandsdämpfer (81) verbunden zu sein, dass der Befestigungskörper (20) einen Blatthinterkantenanschluss (50) umfasst, der konfiguriert ist, um von einer Blatthinterkantenverbindungsstange (55) durchquert zu werden, die konfiguriert ist, um mit einem zweiten Luftwiderstandsdämpfer (82) verbunden zu sein, dass der Befestigungskörper (20) einen Verbindungsanschluss (60) umfasst, der konfiguriert ist, um von mindestens zwei Verbindungsstangen (65, 75) durchquert zu werden, die mit einer ersten Verstärkung (96) eines laminierten sphärischen Anschlags (95) verbunden sind.

2. Blatt nach Anspruch 1, **dadurch gekennzeichnet, dass** der Anstellwinkelanschluss (30) näher am Blattvorderkantenanschluss (40) als am Blatthinterkantenanschluss (50) angeordnet ist.

3. Blatt nach einem der Ansprüche 1 bis 2,
**dadurch gekennzeichnet, dass** der Anstellwinkelanschluss (30) eine Anstellwinkelgelenkgabel (37) mit zwei parallelen Anstellwinkelflügeln (31, 32) aufweist, die untrennbar mit der Hülle (25) verbunden sind, wobei die beiden Anstellwinkelflügel (31, 32) jeweils zwei Anstellwinkelöffnungen (33, 34) aufweisen, die entlang einer Anstellwinkelverbindungsachse (AXLP) ausgerichtet und konfiguriert sind, um von der Anstellwinkelverbindungsstange (35) entlang der Anstellwinkelverbindungsachse (AXLP) durchquert zu werden, und dass die Anstellwinkelgelenkgabel (37) aus der Hülle (25) in einen Bereich (EXT) außerhalb des Blattes (1) vorspringt.

4. Blatt nach einem der Ansprüche 1 bis 3,
**dadurch gekennzeichnet, dass** der Blattvorderkantenanschluss (40) eine Vorderkantengelenkgabel (47) mit zwei parallelen Vorderkantenflügeln (41, 42) aufweist, die untrennbar mit der Hülle (25) verbunden sind, wobei die beiden Vorderkantenflügel (41, 42) jeweils zwei Vorderkantenöffnungen (43, 44) aufweisen, die entlang einer Vorderkantenachse (AXLBA) ausgerichtet und konfiguriert sind, um von der Vorderkantenverbindungsstange (45) entlang der Vorderkantenachse (AXLBA) durchquert zu werden, und dass die Vorderkantengelenkgabel (47) aus der Hülle (25) in einen Bereich (EXT) außerhalb des Flügelblatts (1) vorspringt.

5. Blatt nach den Ansprüchen 3 und 4,
**dadurch gekennzeichnet, dass** jeder Anstellwinkelflügel (31, 32) an die beiden Vorderkantenflügel (41, 42) angrenzend angeordnet ist.

6. Blatt nach einem der Ansprüche 1 bis 3,
**dadurch gekennzeichnet, dass** der Blattvorderkantenanschluss (40) zwei Vorderkantenöffnungen (43, 44) aufweist, die in der Hülle (25) beiderseits des Innenraums (INT) entlang einer Vorderkantenachse (AXLBA) ausgebildet sind, wobei die beiden Vorderkantenöffnungen (43, 44) konfiguriert sind, um von der Vorderkantenverbindungsstange (45) entlang der Vorderkantenachse (AXLBA) durchquert zu werden.

7. Blatt nach einem der Ansprüche 1 bis 6,
**dadurch gekennzeichnet, dass** der Blatthinterkantenanschluss (50) eine Hinterkantengelenkgabel (57) mit zwei parallelen Hinterkantenflügeln (51, 52) aufweist, die untrennbar mit der Hülle (25) verbunden sind, dass die beiden Hinterkantenflügel (51, 52) jeweils zwei Hinterkantenöffnungen (53, 54) aufweisen, die entlang einer Hinterkantenachse (AXLBF) ausgerichtet und konfiguriert sind, um von der Hinterkantenverbindungsstange (55) entlang der Hinterkantenachse (AXLBF) durchquert zu werden, und dass die Hinterkantengelenkgabel (57) aus dem Gehäuse (25) in eine Umgebung (EXT) außerhalb des Flügelblatts (1) vorspringt.

8. Blatt nach einem der Ansprüche 1 bis 6,
**dadurch gekennzeichnet, dass** der Blatthinterkantenanschluss (50) zwei Hinterkantenöffnungen (53, 54) aufweist, die in der Hülle (25) beiderseits des Innenraums (INT) entlang einer Hinterkantenachse (AXLBF) ausgebildet sind, und dass die beiden Hinterkantenöffnungen (53, 54) konfiguriert sind, um von der Hinterkantenverbindungsstange (55) entlang der Hinterkantenachse (AXLBF) durchquert zu werden.

9. Blatt nach den Ansprüchen 3 und 4 und 7,
**dadurch gekennzeichnet, dass** der Befestigungskörper (20) einen Anstellwinkelanschluss (30) nach Anspruch 3, einen Blattvorderkantenanschluss (40) nach Anspruch 4 und einen Blatthinterkantenanschluss (50) nach Anspruch 7 aufweist.

10. Blatt nach den Ansprüchen 3 und 6 und 8,
**dadurch gekennzeichnet, dass** der Befestigungskörper (20) einen Anstellwinkelanschluss (30) nach Anspruch 3, einen Blattvorderkantenanschluss (40) nach Anspruch 6 und einen Blatthinterkantenanschluss (50) nach Anspruch 8 aufweist.

11. Blatt nach einem der Ansprüche 1 bis 10,
**dadurch gekennzeichnet, dass** der Verbindungsanschluss (60) für jede Verbindungsstange (65, 75) einen Satz (67, 77) von zwei Verbindungsöffnungen (63-64, 73-74) aufweist, die in der Hülle (25) entlang einer Verbindungsachse (AXLC1, AXLC2) ausgebildet sind, die konfiguriert ist, um mit einer Verbindungstange (65, 75) zusammenzufallen.

12. Blatt nach einem der Ansprüche 1 bis 11,
**dadurch gekennzeichnet, dass** die Hülle (25) eine Schicht (26) aus Verbundwerkstoffen aufweist, die den Innenraum (INT) umgibt und den Laufteil (5) verlängert, wobei die Hülle (25) zumindest im Bereich des Blatthinterkantenanschlusses (50) und des Blattvorderkantenanschlusses (40) eine geschichtete Verstärkung (27) aufweist.

13. Rotor (90) mit einem Rotorkopf (91), wobei der Rotor (90) mindestens einen laminierten sphärischen Anschlag (95) umfasst, wobei der laminierte sphärische Anschlag (95) einen laminierten Mittelteil (97) umfasst, der zwischen einer ersten Verstärkung (96) und einer zweiten Verstärkung (98) eingefügt ist, wobei die zweite Verstärkung (98) am Rotorkopf (91) befestigt ist,
**dadurch gekennzeichnet, dass** der Rotor (90) mindestens ein Blatt (1) nach einem der Ansprüche 1 bis 12 umfasst, dass der Rotor (90) mindestens zwei Verbindungsstangen (65, 75) umfasst, die den Verbindungsanschluss (60) und die zweite Verstärkung (98) durchqueren, dass der Rotor (90) eine Anstellwinkelverbindungsstange (35) umfasst, die den Anstellwinkelanschluss (30) und ein Anstellwinkelgelenk einer Anstellwinkelstange (36) durchquert, dass der Rotor (90) eine Blattvorderkantenverbindungsstange (45) umfasst, die den Blattvorderkantenanschluss (40) und ein Blattvorderkantengelenk eines ersten Schleppdämpfers (81) durchquert, dass der Rotor (90) eine Blatthinterkantenverbindungsstange (55) umfasst, die den Blatthinterkantenanschluss (50) und ein Blatthinterkantengelenk eines zweiten Schleppdämpfers (82) durchquert.

14. Rotor nach Anspruch 13,
**dadurch gekennzeichnet, dass** der Rotor (90) mindestens drei Blätter (101, 102, 103) gemäß einem der Ansprüche 1 bis 12 umfasst, der Blatthinterkantenanschluss eines bestimmten Blattes (101) über einen Schleppdämpfer (82) mit dem Blattvorderkantenanschluss des in einer Drehrichtung (104) des Rotors (90) folgenden Blattes (102) verbunden ist und der Blattvorderkantenanschluss des bestimmten Blattes (101) über einen weiteren Schleppdämpfer (81) mit dem Blatthinterkantenanschluss des in der Drehrichtung (104) vorausgehenden Blattes (103) verbunden ist.

15. Luftfahrzeug (100),
**dadurch gekennzeichnet, dass** das Luftfahrzeug (100) einen Rotor (90) gemäß einem der Ansprüche 1 bis 14 aufweist.

## Claims

1. Blade (1) comprising a blade root (10) extended by an aerodynamic running part (5) which extends up to a free end (6),
**characterized in that** the blade root (10) comprises a single-piece attachment body (20) made of composite materials, the attachment body (20) being hollow and having an envelope (25) delimiting an empty internal space (INT), the attachment body (20) integrating a pitch attachment (30) configured to be passed through by a pitch connecting rod (35) connected to a pitch lever (36), the attachment body (20) integrating a leading edge attachment (40) configured to be passed through by a leading edge connecting rod (45) connected to a first lead-lag damper (81), the attachment body (20) integrating a trailing edge attachment (50) configured to be passed through by a trailing edge connecting rod (55) configured to be connected to a second lead-lag damper (82), the attachment body (20) integrating a connecting attachment (60) configured to be passed through by at least two connecting rods (65, 75) connected to a first frame (96) of a laminate spherical abutment (95).

2. Blade according to claim 1,
**characterized in that** said pitch attachment (30) is closer to the leading edge attachment (40) than to the trailing edge attachment (50).

3. Blade according to either one of claims 1 to 2,
**characterized in that** said pitch attachment (30) includes a pitch yoke (37) provided with two parallel pitch vanes (31, 32), inseparable from said envelope (25), said two pitch vanes (31, 32) respectively comprising two pitch orifices (33, 34) aligned about a pitch connecting axis (AXLP) and configured to be passed through by the pitch connecting rod (35) about said pitch connecting axis (AXLP), said pitch yoke (37) projecting from the envelope (25) into an environment (EXT) outside of the blade (1).

4. Blade according to any one of claims 1 to 3,
**characterized in that** said leading edge attachment (40) includes a leading edge yoke (47) provided with two parallel leading edge vanes (41, 42), inseparable from said envelope (25), said two leading edge vanes (41, 42) respectively comprising two leading edge orifices (43, 44) aligned about a leading edge axis (AXLBA) and configured to be passed through by the leading edge connecting rod (45) about said leading edge axis (AXLBA), said leading edge yoke (47) projecting from the envelope (25) into an environment (EXT) outside of the blade (1).

5. Blade according to claims 3 and 4,
**characterized in that** each pitch vane (31, 32) is coupled with the two leading edge vanes (41, 42).

6. Blade according to any one of claims 1 to 3,
**characterized in that** said leading edge attachment (40) includes two leading edge orifices (43, 44) provided in the envelope (25) on either side of said internal space (INT) about a leading edge axis (AXLBA), the two leading edge orifices (43, 44) being configured to be passed through by the leading edge connecting rod (45) about said leading edge axis (AXLBA).

7. Blade according to any one of claims 1 to 6,
**characterized in that** said leading edge attachment (50) includes a trailing edge yoke (57) provided with two parallel trailing edge vanes (51, 52), inseparable from said envelope (25), said two trailing edge vanes (51, 52) respectively comprising two trailing edge orifices (53, 54) aligned about a trailing edge axis (AXLBF) and configured to be passed through by the trailing edge connecting rod (55) about said trailing edge axis (AXLBF), said trailing edge yoke (57) projecting from the envelope (25) into an environment (EXT) outside of the blade (1).

8. Blade according to any one of claims 1 to 6,
**characterized in that** said trailing edge attachment (50) includes two trailing edge orifices (53, 54) provided in the envelope (25) on either side of said internal space (INT) about a trailing edge axis (AXLBF), the two trailing edge orifices (53, 54) being configured to be passed through by the trailing edge connecting rod (55) about said trailing edge axis (AXLBF).

9. Blade according to claims 3, 4 and 7,
**characterized in that** the attachment body (20) includes a pitch attachment (30) according to claim 3, a leading edge attachment (40) according to claim 4, and a trailing edge attachment (50) according to claim 7.

10. Blade according to claims 3, 6 and 8,
**characterized in that** the attachment body (20) comprises a pitch attachment (30) according to claim 3, a leading edge attachment (40) according to claim 6, and a trailing edge attachment (50) according to claim 8.

11. Blade according to any one of claims 1 to 10,
**characterized in that** said connecting attachment (60) includes, for each connecting rod (65, 75), a clearance (67, 77) of two connecting orifices (63-64, 73-74), provided in the envelope (25) about a connecting axis (AXLC1, AXLC2) configured to be combined with a connecting rod (65, 75).

12. Blade according to any one of claims 1 to 11,
**characterized in that** said envelope (25) includes a layer (26) made of composite materials surrounding said internal space (INT) and extending the running part (5), said envelope (25) including a stratified reinforcement (27) at least at the trailing edge attachment (50) and at the leading edge attachment (40).

13. Rotor (90) provided with a rotor head (91), the rotor (90) comprising at least one laminate spherical abutment (95), the laminate spherical abutment (95) comprising a laminate central part (97) inserted between a first frame (96) and a second frame (98), the second frame (98) being fixed to the rotor head (91),
**characterized in that** the rotor (90) comprises at least one blade (1) according to any one of claims 1 to 12, said rotor (90) comprising at least two said connecting rods (65, 75) passing through said connecting attachment (60) and said second frame (98), said rotor (90) comprising a pitch connecting rod (35) passing through said pitch attachment (30) and a pitch joint of a pitch connecting rod (36), said rotor (90) comprising a leading edge connecting rod (45) passing through said leading edge attachment (40) and a leading edge joint of a first lead-lag damper (81), said rotor (90) comprising a trailing edge connecting rod (55) passing through said trailing edge attachment (50) and a trailing edge joint of a second lead-lag damper (82).

14. Rotor according to claim 13,
**characterized in that** the rotor (90) comprising at least three blades (101, 102, 103) according to any one of claims 1 to 12,
the trailing edge attachment of a particular blade (101) is connected by a lead-lag damper (82) to the leading edge attachment of the blade (102), which follows along a direction of rotation (104) of the rotor (90) and the leading edge attachment of the particular blade (101) is connected by another lead-lag damper (81) to the trailing edge attachment of the blade (103) which precedes along said direction of rotation (104).

15. Aircraft (100),
**characterized in that** the aircraft (100) includes a rotor (90) according to either one of claims 13 to 14.
